# EUROPÄISCHE PATENTSCHRIFT

(11) **EP 0 797 862 B1**
(45) Veröffentlichungstag und Bekanntmachung des Hinweises auf die Patenterteilung: **03.03.1999**
(21) Anmeldenummer: 95936987.7
(22) Anmeldetag: 25.11.1995
(51) Int. Cl.: H02K 19/22, H01F 5/02

(54) **Elektrische Maschine, insbesondere Generator für Fahrzeuge, mit tangentialer Einklemmstrecke für ein Ende der Erregerwicklung**
Electric machine, in particular generator for vehicles, comprising a tangential path for clamping an end of the excitation winding
Machine électrique, notamment alternateur pour véhicules, comportant un trajet tangentiel pour serrer un bout du bobinage excitateur

(30) Priorität: 14.12.1994 DE 9419991 U
(43) Veröffentlichungstag der Anmeldung: 01.10.1997
(73) Patentinhaber: ROBERT BOSCH GMBH, 70442 Stuttgart (DE)
(72) Erfinder: KREUZER, Helmut, D-71701 Schwieberdingen (DE); ECKERT, Oliver, Cowbridge CF7 7EA (GB)
(86) Internationale Anmeldenummer: DE9501674
(87) Internationale Veröffentlichungsnummer: WO9619033

(56) Entgegenhaltungen:
- CH-A- 369 212
- DE-A- 2 710 295
- GB-A- 1 251 792
- GB-A- 1 318 149
- US-A- 3 445 747
- US-A- 4 588 915

## Beschreibung

Die Erfindung betrifft eine elektrische Maschine, insbesondere einen Generator für Fahrzeuge, nach dem Oberbegriff des Anspruchs 1 (GB-A-1 251 792).

### Stand der Technik

Es ist bekannt, in Fahrzeugen, beispielsweise Kraftfahrzeugen und Schienenfahrzeugen, Generatoren zur Batterieladung und Bordnetzversorgung einzusetzen. Die Generatoren weisen hierzu einen in einem Statorgehäuse drehbar gelagerten Klauenpolläufer auf. Der Klauenpolläufer besitzt eine koaxial zu einer Läuferwelle drehfest angeordnete Erregerwicklung, die über ihre Umfangsfläche von Polfingern der Klauenpole übergriffen wird. Die Erregerwicklung ist hierbei auf einem Polkern, der mit der Läuferwelle drehfest verbunden ist, angeordnet. Zur Fixierung der Erregerwicklung auf dem Polkern ist es bekannt, die Erregerwicklung nach dem Wickelvorgang zu bandagieren, um so eine drehfeste Anordnung der Erregerwicklung zu erreichen. Zusätzlich können Haken, Klebebänder usw. eingesetzt werden, die eine stabile Lage der Erregerwicklung in der Zeit bis zur Imprägnierung und Montage gewährleisten sollen. Hierbei ist jedoch nachteilig, daß durch die Bandagen und die zusätzlichen Befestigungsteile eine Imprägnierung der Erregerwicklung erschwert wird, da das Imprägniermittel an seinem gleichmäßigen Eintrtt in die Erregerwicklung gehindert wird. Weiterhin ist nachteilig, daß durch die zusätzliche Anordnung von Befestigungsitteln und Bandagen es zu einer Unwucht der Erregerwicklung kommen kann, die insbesondere bei extrem schnell laufenden Klauenpolläufern zu Vibrationen führen können. Weiterhin können sich die Bandagen lösen, so daß es zu einer Beeinträchtigung der Wirkungsweise, wenn nicht sogar zu einer Zerstörung der gesamten elektrische Maschine führen kann.

GB-A-1 318 149 zeigt für den Wicklungsanfang eine tangentiale Einführung des Wicklungsdrahtes zur unteren Wicklungslage. Das oben liegende Wicklungsende (44) ist dagegen nicht an der Stirnseite der Erregerwicklung eingeklemmt, sondern von einem Anschluß (122) gehalten.

Auch die Druckschrift DE-A-27 10 295 zeigt keine weitergehende Lösung. Dort dient die Aussparung zur Einführung des Wicklungsanfanges (9a), der von einer Führung (9) gehalten ist. Das obenliegende Wicklungsende (6) wird auch hier ohne Einklemmstrecke unmittelbar vom Längsschlitz (13a) einer Führung (13) aufgenommen.

Aus der CH-A-369 212 gehen zwei randoffene, schlitzförmige Aussparungen eines Wicklungsträgerflansches hervor, die gleich tief gewählt sind, so daß sich jede dieser Aussparungen wahlweise zur Aufnahme des Wicklungsanfangs oder des Wicklungsendes eignet. Jedoch offenbart die Entgegenhaltung keine tangentiale Einklemmung des (obenliegenden) Wicklungsendes.

### Vorteile der Erfindung

Bei einer elektrischen Maschine mit den im Anspruch 1 genannten Merkmalen ist es demgegenüber möglich, die Erregerwicklung schüttel- und schleudersicher auf der Läuferwelle anzuordnen. Dadurch, daß die Erregerwicklung auf einem Wicklungsträger angeordnet ist, der Mittel zum Festklemmen der Wicklungsenden aufweist, ist es in einfacher Weise möglich, die Erregerwicklung zu fixieren, ohne daß die zusätzliche Anordnung von Bandagen oder ähnlichem notwendig wird. Hierdurch werden einerseits Ansätze für Unwuchten der Erregerwicklung vermieden und andererseits ist eine Zugänglichkeit der Erregerwicklung über die gesamte Oberfläche zum Einbringen von Imprägniermitteln gewährleistet. Hierdurch kommt es zu Qualitätsverbesserungen bei den Erregerwicklungen, da ein besseres Eindringen des Imprägniermittels über die gesamte Tiefe der Erregerwicklung gewährleistet ist. Durch die Einsparung von Bandagen und zusätzlichen Haltemitteln kann weiterhin der Fertigungsaufwand zur Vorfertigung der Erregerwicklung gesenkt werden, da weniger Zeit und weniger Material benötigt wird.

In der Erfindung ist vorgesehen, daß der Wicklungsträger von einem die Erregerwicklung U-förmig umgreifenden Isolierkörper gebildet ist, dessen den Schleifringen zugeordneter Flansch randoffene Aussparungen zur Aufnahme der Wicklungsenden aufweist. Hierdurch wird es in einfacher Weise möglich, beim Beginn des Wicklungsvorgangs der Erregerwicklung den Wicklungsanfang durch eine erste Aussparung zu führen und nach Abschluß des Wicklungsvorgangs das Wicklungsende durch eine zweite Aussparung zu führen. Durch die Fixierung der Wicklungsenden in den Aussparungen des Wicklungsträgers ist eine zusätzliche Arretierung der gesamten Erregerwicklung nicht mehr notwendig. Die Aussparungen sind vorzugsweise so ausgebildet, daß diese eine derartige radiale Erstreckung aufweisen, daß der Wicklungsanfang und das Wicklungsende fluchtend mit dem Innenumfang und dem Außenumfang der Erregerwicklung einklemmbar sind. Durch eine spezielle Ausbildung der Aussparungen, vorzugsweise durch eine als Einschnitt in Richtung der Läuferwelle ausgebildete Aussparung, wird eine selbsthemmende Arretierung des Wicklungsendes erreicht, die selbst bei hohen Drehzahlen der Läuferbaugruppe einen schüttel- und schleudersicheren Sitz gewährleisten.

Weitere vorteilhafte Ausgestaltungen ergeben sich aus den übrigen in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Schnittdarstellung durch einen Wicklungsträger mit eingelegter Erregerwicklung;
- Figur 2: eine Seitenansicht eines Wicklungsträgers;
- Figur 3: eine Schnittdarstellung einer endmontierten Läuferbaugruppe;
- Figur 4: eine Draufsicht auf eine Erregerspule;
- Figur 5: eine Detailansicht und
- Figur 6: eine teilweise aufgeschnittene Seitenansicht einer Erregerspule.

### Beschreibung der Ausführungsbeispiele

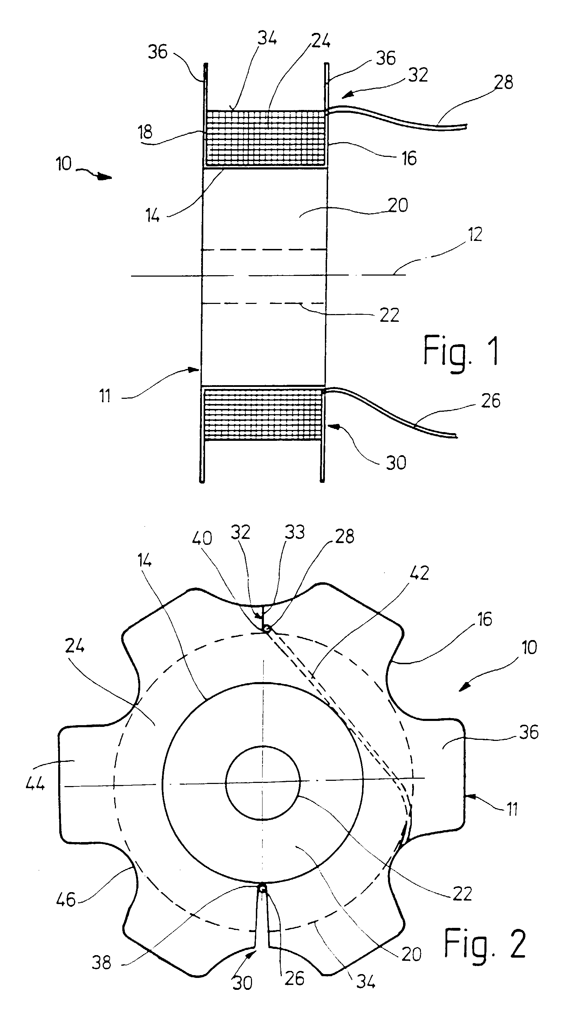

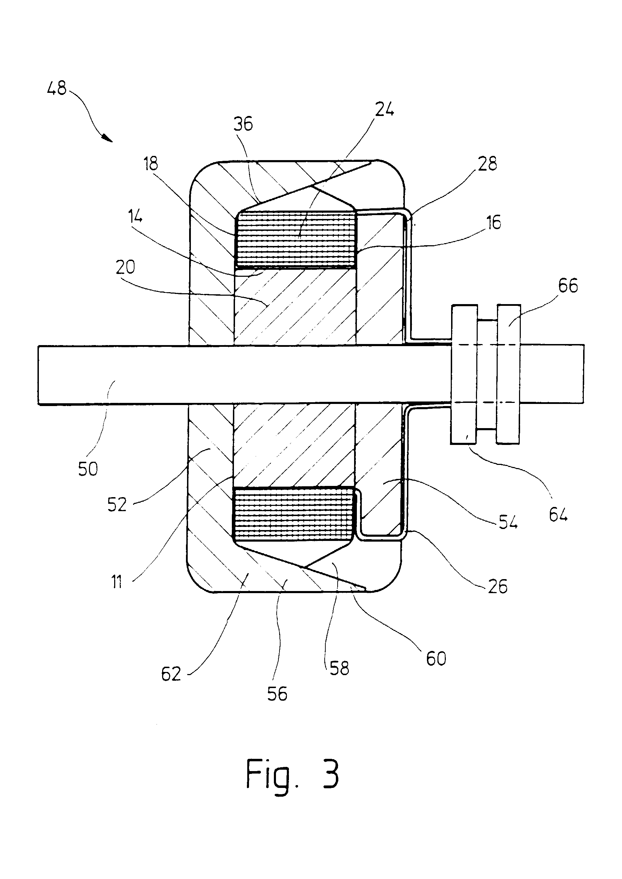

In der Figur 1 ist eine allgemein mit 10 bezeichnete Erregerspule eines Klauenpol-Generators dargestellt. Die Erregerspule 10 hat einen Wicklungsträger 11 aus Isolierstoff, der aus einem koaxial zu einer hier angedeuteten Drehachse 12 angeordneten Hülsenabschnitt 14 besteht, der beidseitig in einen radialen Flansch 16 und 18 ausläuft. Der Hülsenabschnitt 14 ist auf einem Polkern 20 angeordnet, der eine axiale Durchgangsöffnung 22 zur Aufnahme einer in Figur 3 dargestellten Läuferwelle aufweist. Der Wicklungsträger 11 besteht hier aus einem Kunststoff und umgreift eine Erregerwicklung 24 U-förmig. Die Erregerwicklung 24 besitzt einen Wicklungsanfang 26 und ein Wicklungsende 28, die hier lediglich schematisch angedeutet sind. Der in der Figur 1 rechts dargestellte Flansch 16, der in noch zu erläuternder Weise Schleifringen einer Läuferbaugruppe zugewandt ist, besitzt - wie in Figur 2 erkennbar - radial verlaufende Aussparungen 30 beziehungsweise 32, die für die Aufnahme des Wicklungsanfangs 26 beziehungsweise des Wicklungsendes 28 ausgebildet sind. Die Aussparungen 30 und 32 sind hierbei randoffen, das heißt, diese sind als radial nach außen verlaufende Einschnitte ausgebildet. Die Flansche 16 und 18 des Wicklungsträgers 11 besitzen an ihrem Außenumfang über eine äußere Mantelfläche 34 der Erregerwicklung 24 hinausragende Abschnitte 36.

Anhand der Figur 1 soll der Wicklungsvorgang für die Herstellung der Erregerwicklung 24 kurz erläutert werden. Der Wicklungsträger 11 wird mittels einer geeigneten Spanneinrichtung in einer allgemein bekannten Wickelmaschine festgelegt. Der Wicklungsanfang 26 der Erregerwicklung 24 wird durch die Aussparung 30 geführt, so daß der Wicklungsanfang 26 seitlich über dem Flansch 16 übersteht und auf dem hülsenabschnitt 14 des Wicklungsträgers 11 eine erste Lage des Wicklungsdrahtes gewickelt werden kann. Durch das Einklemmen des Wicklungsanfangs 26 in der Aussparung 30 ist dieses lagefixiert, so daß ein Verrutschen der ersten Lage während des Wickelvorgangs ausgeschlossen ist. In an sich bekannter Weise wird nun die Erregerwicklung 24 entsprechend ihrer gewünschten Dimension, das heißt entsprechend der gewünschten Anzahl von Lagen, gewickelt. Hat die Erregerwicklung ihre vorgesehene Größe erreicht, das heißt, die Wicklungsmaschine hat die an ihr eingestellte Windungszahl der Erregerwicklung 24 erreicht, wird nach Abstellen der Wickelmaschine das Wicklungsende 28 durch die Aussparung 32 des Flansches 16 geführt. Hierbei erfolgt ein Festklemmen des Wicklungsendes 28 in der Aussparung 32, so daß die Erregerwicklung 24 unter der Wickelspannung verharrt und ein Auflockern des Wicklunpspaketes nicht möglich ist. Nach Abschluß des Wicklungsvorgangs wird die Erregerwicklung 24 in bekannter Weise imprägniert, wobei hier die gesamte Mantelfläche 34 zum Auf- beziehungsweise Einbringen eines Inprägniermittels in die Erregerwicklung 24 zur Verfügung steht. Eine Behinderung des Eindringens des Imprägniermittels durch zusätzlich angebrachte Bandagen oder ähnliches ist ausgeschlossen. Durch das nunmehr mögliche gleichmäßige Eindringen des Imprägniermittels in die Erregerwicklung 24 ist eine homogene Verteilung innerhalb des Wicklungspaketes möglich, so daß sehr hohe Qualitätsansprüche an die Erregerwicklung 24 gestellt werden können.

In der Figur 2 ist zur Verdeutlichung eine Seitenansicht des in Figur 1 gezeigten Wicklungsträgers 11 dargestellt. Gleiche Teile wie in Figur 1 sind mit gleichen Bezugszeichen versehen und nicht nochmals erläutert. Anhand der Seitenansicht wird deutlich, daß die Aussparungen 30 beziehungsweise 32 als randoffene, radial verlaufende Schlitze in dem Flansch 16 des Wicklungsträgers 11 angeordnet sind. Die Aussparung 30 für den Wicklungsanfang 26 besitzt hierbei eine radiale Erstreckung, die im wesentlichen bis zu dem Hülsenabschnitt 14 des Wicklungsträgers 11 reicht. Durch die randoffene Ausbildung der Aussparung 30 ist ein einfaches Einlegen des Wicklungsanfangs 26 in den Wicklungsträger 11 möglich, ohne daß aufwendige Einfädelungen vorgenommen werden müssen. Die Aussparung 30 besitzt hierbei vorzugsweise eine radial verlaufende Konizität, das heißt, diese verjüngt sich in Richtung des Hülsenabschnittes 14. An ihrem Grund 38 besitzt die Aussparung 30 eine Breite, die dem Durchmesser des Wicklungsdrahtes entspricht, so daß dieser selbsttätig in der Aussparung 30 festklemmt. Gegebenenfalls kann die Breite der Aussparung 30 am Grund 38 auch geringer gewählt sein, wenn der Wicklungsträger 11 insgesamt aus einem leicht elastischen Material besteht, so daß eine Einschnürung des Wicklungsdrahtes beim Festklemmen ausgeschlossen ist. Nach Abschluß des Wicklungsvorgangs, das heißt, wenn die Erregerwicklung 24 einen auf der vorgesehenen Mantelfläche 34 liegenden Durchmesser erreicht hat, wird das Wicklungsende 28 in der ebenfalls radial verlaufenden Aussparung 32 in vollkommen analoger Weise festgeklemmt. Die Aussparung 32 besitzt eine derartige radiale Erstreckung, daß diese bis auf Höhe der Mantelfläche 34 der Erregerwicklung 24 reicht. Die Aussparung 32 ist hierbei als Einschnitt ausgebildet, der auf einer Seite des Grundes 40 der Aussparung 32 einmündet, deren Breite dem Durchmesser des Wicklungsdrahtes entspricht. Die Wandungen 33 dieser Aussparung 32 grenzen beziehungsweise stoßen dabei aneinander an. Zum besseren Festklemmen des Wicklungsendes 28 ist vorgesehen, daß dieses Wicklungsende vor der Aussparung 32 über eine, hier angedeutete, zur Erregerwicklung 24 tangential verlaufende Einklemmstrecke 42 zwischen der Erregerwicklung 24 und dem Flansch 16 des Wicklungsträgers 11 geführt ist. Nach Beendigung des Wicklungsvorgangs kann durch eine Elastizität des Flansches 16 das Wicklungsende 28 zwischen die Erregerwicklung 24 und den Flansch 16 eingezogen werden. Beim Einführen des Wicklungsendes 28 in die Aussparung 32 klappt die Wandung 33 zunächst seitlich vor. Sobald das Wicklungsende 28 zum Grund 40 der Aussparung 32 gelangt ist, federt die Wandung 33 wieder zurück. Die Fixierung des Wicklungsendes 28 entlang der Klemmstrecke 42 erfolgt durch die Federkraft des Flansches 16, durch die Imprägnierung der Erregerwicklung 24 und durch - wie noch erläutert wird - von außen an den Wicklungsträger 11 angreifende Polfinger der Läuferbaugruppe.

In der Seitenansicht des Wicklungsträgers 11 wird weiterhir. deutlich, daß die Abschnitte 36 des Flansches 16 beziehungsweise 18 laschenartig ausgebildet sind, das heißt, über den Umfang der Flansche 16 und 18 wechseln einander Erhöhungen 44 und Vertiefungen 46 ab. Die Anzahl der Erhöhungen 44 entspricht der späteren Anzahl der Polfinger, wobei die Kontur der Erhöhungen 44 und der Vertiefungen 46 so gewählt ist, daß den Polfingern jeweils eine Erhöhung 44 und einem zwischen zwei benachbarten Polfingern vorhandenen Abstand eine Vertiefung 46 zugeordnet ist. Die zur Aufnahme des Wicklungsanfangs 26 beziehungsweise Wicklungsendes 28 ausgebildeten Aussparungen 30 und 32 münden jeweils in einer Vertiefung 46, wodurch gewährleistet ist, daß der Wicklungsanfang 26 und das Wicklungsende 28 in einem Bereich zwischen zwei benachbarten Polfingern aus der Erregerwicklung 24 herausführbar sind.

In der Figur 3, in der wiederum gleiche Teile wie in den Figuren 1 und 2 mit gleichen Bezugszeichen versehen sind, ist ein insgesamt mit 48 bezeichneter Klauenpolläufer im montierten Zustand gezeigt. Der Klauenpolläufer 48 wird in einem Startergehäuse eines Generators drehbar gelagert und bildet somit die Läuferbaugruppe des Generators. Zusätzlich zu dem Wicklungsträger 11 und der Erregerwicklung 24 besitzt der Klauenpolläufer 48 eine Läuferwelle 50, auf der drehfest der Polkern 20 angeordnet ist. Der Polkern 20 ist dabei so angeordnet, daß dieser innerhalb des Hülsenabschnittes 14, und damit in dem von der Erregerwicklung 24 umgriffenen Raum, zu liegen kommt. An den Stirnseiten des Polkerns 20 sind in bekannter Weise jeweils eine Polscheibe 52 beziehungsweise 54 angeordnet, die einstückig in Klauenpole 56 beziehungsweise 58 auslaufen. Die Klauenpole 56 und 58 übergreifen dabei die Erregerwicklung 24. Die Klauenpole 56 und 58 sind derart angeordnet, daß diese sich über den Umfang des Klauenpolläufers 48 gesehen, abwechseln, das heißt, sich entweder von der Polscheibe 52 oder der Polscheibe 54 erstrecken. Die Klauenpole 56 beziehungsweise 58 bilden hierbei - in Draufsicht gesehen - trapezförmig spitz zulaufende Polfinger 60 beziehungsweise 62 aus, die ineinandergreifen und zwischen denen jeweils ein Zwischenraum besteht. Bei der Montage des Klauenpolläufers 48 werden die Klauenpole 56 und 58 quasi ineinandergeschoben, so daß die Abschnitte 36 des Wicklungsträgers 11 jeweils an einem Polfinger 60 beziehungsweise 62 der Klauenpole 56 beziehungsweise 58 anliegen. Die Abschnitte 36 werden hierbei nach innen abgebogen, so daß sie die Erregerwicklung 24 teilweise übergreifen. Durch die Abwinklung der einstückig mit dem Wicklungsträger 11 ausgebildeten Abschnitte 36 wird eine Fixierung der Erregerwicklung 24 erreicht, so daß selbst bei extrem schnellen Drehzahlen die Erregerwicklung 24 sich nicht lockern kann, da diese quasi zwischen den Klauenpolen 56 und 58 allseitig eingespannt ist.

Der Wicklungsanfang 26 und das Wicklungsende 28 der Erregerwicklung 24 sind mit Schleifringen 64 und 66 verbunden. Die Schleifringe 64 und 66 sind auf der Läuferwelle 50 drehfest angeordnet, indem diese beispielsweise auf einen Zapfen der Läuferwelle 50 aufgeschoben sind. Der Wicklungsanfang 26 und das Wicklungsende 28 sind an der schleifringseitigen Polscheibe 54 des Klauenpolläufers 48 entlanggeführt und mit den Schleifringen 64 beziehungsweise 66 kontaktiert. Diese können hierzu beispielsweise direkt mit den Schleifringen verschweißt sein.

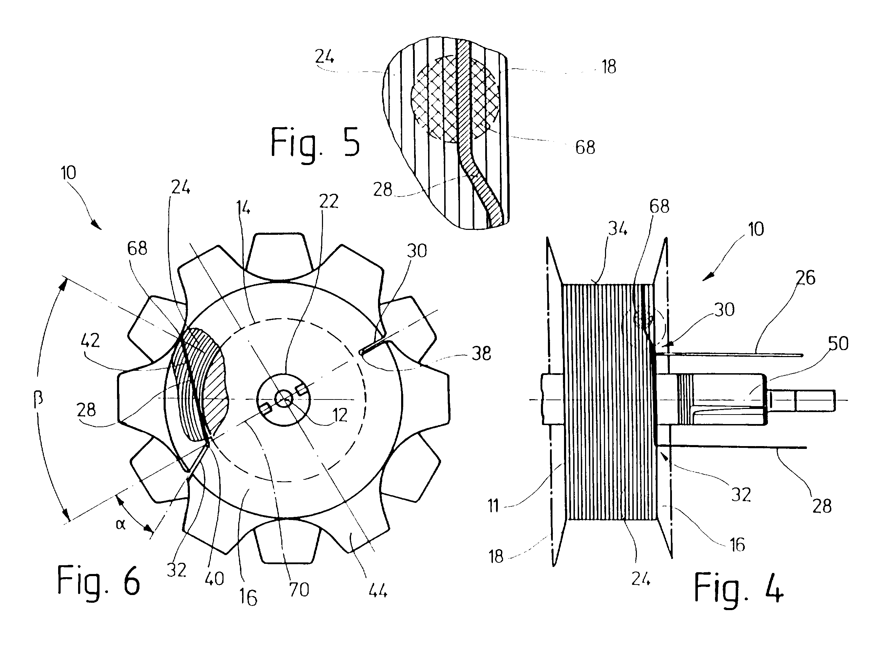

In den Figuren 4 bis 6 ist eine weitere Ausführungsvariante einer Erregerspule 10 gezeigt. Gleiche Teile wie in den Figuren 1 bis 3 sind trotz einer teilweise anderen Anordnung, jedoch bei gleicher Funktion, zur Verdeutlichung mit gleichen Bezugszeichen versehen. Bei der in Figur 4 gezeigten Draufsicht auf die Erregerspule 10 ist die in dem Wicklungsträger 11 angeordnete Erregerwicklung 24 dargestellt. Die Erregerwicklung 24 besitzt den Wicklungsanfang 26, der durch eine Aussparung 30 geführt ist, die der in Figur 2 erläuterten entspricht. Das Wicklungsende 28 der Erregerwicklung 24 ist auf der Mantelfläche 34 der Erregerwicklung 24 mittels eines Harzpunktes 68 fixiert. Der Harzpunkt 68 ist so angeordnet, daß die letzte Windung der Erregerwicklung 24 am schleifringseitigen Flansch 16 des Wicklungsträgers 11 positioniert ist.

In der Figur 5 wird in einer vergrößerten Detaildarstellung des Harzpunktes 68 deutlich, daß dieser das Wicklungsende 28 auf der Erregerwicklung 24 fixiert, das heißt unverrückbar festhält. Hierdurch wird gewährleistet, daß die Erregerwicklung 24 unter der Wickelspannung nicht auflockert. Der Harzpunkt 68 ist hierbei so dimensioniert, daß er die Haltekräfte zur Fixierung des Wicklungsendes 28 aufbringen kann, indem das Wicklungsende 28 quasi auf die Erregerwicklung 24 festgeklebt wird. Das den Harzpunkt 68 ergebende Harz dringt hierbei in dem Auftragsbereich in die Zwischenräume der obersten Lage der Erregerwicklung ein, so daß ein sicheres, unverrückbares Festhalten des Wicklungsendes 28 gewährleistet ist. Von dem Harzpunkt 68 wird das Wicklungsende 28 zu der Aussparung 32 in dem Flansch 18 geführt.

Die Führung des Wicklungsendes 28 wird in der in Figur 6 gezeigten Ansicht der Erregerspule 10 verdeutlicht. Die Darstellung in der Figur 6 zeigt die Erregerspule 10 aus Sicht des schleifringseitigen Flansches 16. Von dem Harzpunkt 68 ist das Wicklungsende 28 zu dem Grund 40 der Aussparung 32 geführt. Die Aussparung 32 verläuft unter einem Winkel α zu einer Radialen 70 der Erregerspule 10. Der Winkel a nimmt hierbei Werte von ca. 25° bis 30° an. Der Grund 40 der Aussparung 32 liegt in etwa auf einer gedachten Kreislinie, auf der auch der Grund 38 der Aussparung 30 liegt. Wicklungsanfang 26 und Wicklungsende 28 der Erregerwicklung 24 werden somit auch in einem gleichen Abstand zur Drehachse 12 der Erregerspule 10 aus dem Wicklungsträger 11 herausgeführt. Zwischen dem Harzpunkt 68 und dem Grund 40 der Aussparung 32 verläuft das Wicklungsende 28 entlang der Einklemmstrecke 42. Das Wicklungsende 28 ist hier zwischen der Erregerwicklung 24 und dem Flansch 16 des Wicklungsträgers 11 eingeklemmt. Hierzu kann der Flansch 16 nach Beendigung des Wicklungsvorgangs der Erregerspule 24 aufgrund seiner Elastizität nach außen gebogen werden, so daß das Wicklungsende 28 in die Aussparung 32 einfädelbar ist. Die Aussparung 32 kann durch einen unter dem Winkel α verlaufenden Einschnitt gebildet sein, wobei der Grund 40 durch eine Ausstanzung, die in etwa dem Durchmesser des Wicklungsdrahtes entspricht, gebildet wird.

Der Harzpunkt 68 und der Grund 40 der Aussparung 32 sind um einen Winkel β zueinander versetzt angeordnet, der einem von einem Klauenpolfinger (in Figur 3 mit Klauenpol 58 und Polfinger 62 bezeichnet) vorgegebenen Winkelsegment entspricht. Bei dem in den Beispielen gezeigten Klauenpolläufer besitzt dieser jeweils sechs Klauenpolfinger auf jeder Flanschseite des Wicklungsträgers 11. Der Winkel β beträgt somit ca. 60°. Der Harzpunkt 68 und der Grund 40 der Aussparung 32 sind nunmehr so gelegt, daß die Einklemmstrecke 42 des Wicklungsendes 28 komplett unter einem der Klauenpolfinger verläuft.

Bei dem in den Figuren 4 bis 6 gezeigten Ausführungsbeispiel ergibt sich der Vorteil, daß das Fixieren des Wicklungsendes 28 ausschließlich mit einem Harzpunkt 68 ein Imprägnieren und Tränken der Erregerwicklung - über ihre gesamte Mantelfläche 34 zuläßt. Durch die unter einem Winkel α verlaufende Aussparung 32 und die Klemmstrecke 42 wird ein selbständiges Lösen des Wicklungsendes 28 aus dieser Position verhindert. Selbst bei Vibrationen und bei extrem hohen Drehzahlen, die zu einer hohen Schleuderbeanspruchung des Wicklungsendes 28 führen, kann durch die unter einem Winkel α verlaufende Aussparung 32 ein Lösen des Wicklungsendes 28 ausgeschlossen werden. Durch das Verstemmen der Klauenpole zu dem gesamten Klauenpolläufer wird darüber hinaus ein axialer Druck auf die Erregerwicklung 24 ausgeübt, der das Festklemmen des Wicklungsendes 28 entlang der Einklemmstrecke 42 sicher gewährleistet.

Insgesamt ist ein Klauenpolläufer, beispielsweise in Kompakt- oder Topfform herstellbar, der eine Erregerwicklung 24 aufweist, die selbst bei einem robusten Betrieb gegen eine Schüttel- und/oder Schleuderbeanspruchung sicher gelagert ist. Durch das Einsparen von zusätzlichen Befestigungsmitteln, wie beispielsweise Bandagen, ist insgesamt eine Gewichtsreduzierung erreicht, die darüber hinaus noch eine bessere Imprägnierung der Erregerwicklung 24 ermöglicht.

## Patentansprüche

1. Elektrische Maschine, insbesomdere Generator für Fahrzeuge, mit einem in einem Statorgehäuse drehbar gelagerten Läufer, insbesondere Klauenpolläufer (48), der eine koaxial zu einer Läuferwelle (50) drehfest angeordnete Erregerwicklung (24) aufweist, deren Wicklungsanfang (26) und Wicklungsende (28) zu auf der Läuferwelle angeordneten schleifringen (64, 66) geführt sind, wobei die Erregerwicklung (24) auf einem Wicklungsträger (11) angeordnet ist, der von einem die Erregerwicklung (24) U-förmig umgreifenden Isolierkörper gebildet ist, dessen den Schleifringen (64, 66) zugewandter Flansch (16) randoffene, vorzugsweise sich gegenüberliegende Aussparungen (30, 32) zur Aufnahme des Wicklungsanfangs (26) und des Wicklungsendes (28) aufweist, dadurch gekennzeichnet, daß das oben liegende Wicklungsende (28) der Erregerwicklung (24) vor der Aussparung (32) über eine Einklemmstrecke (42) tangential zwischen der Erregerwicklung (24) und dem Flansch (16) des Wicklungsträgers (11) eingeklemmt ist.

2. Elektrische Maschine nach Anspruch 1, dadurch gekennzeichnet, daß die Aussparung (32) für das Wicklungsende (28) sich radial bis etwa zu einer Mantelfläche (34) der Erregerwicklung (24) erstreckt.

3. Elektrische Maschine nach einem der vorhergehenden Ansprüche, dadurch gekennzeichnet, daß die Breite der Aussparung (32) an ihrem Grund (40) dem Durchmesser des Wicklungsdrahtes entspricht.

4. Elekrische Maschine nach Anspruch 3, dadurch gekennzeichnet, daß die Aussparung (32) für das Wicklungsende (28) oberhalb des Grundes (40) als Einschnitt ausgebildet ist, dessen Wandungen (33) aneinander angrenzen.

5. Elektrische Maschine nach einem der Ansprüche 1 bis 4, dadurch gekennzeichnet, daß die Aussparung (32) für das Wicklungsende (28) sich bis zu der gedachten Kreislinie, insbesondere bis zu dem Hülsenabschnitt (14), erstreckt, auf der die Aussparung (30) für den Wicklungsanfang (26) endet (Figur 6).

6. Elektrische Maschine nach Anspruch 5, dadurch gekennzeichnet, daß die Aussparung (32) für das Wicklungsende (28) unter einem Winkel (α) zu einer Radialen (70) des Wicklungsträgers (11) verläuft, der vorzugsweise 25° bis 30° beträgt.

7. Elektrische Maschine nach einem der vorhergehenden Ansprüche, dadurch gekennzeichnet, daß das Wicklungsende (28) mittels eines Klebemittels, insbesondere eines Harzpunktes (68), auf der Erregerwicklung (24) fixiert ist und entlang der Einklemmstrecke (42) zu dem Grund (40) der Aussparung (32) geführt ist, wobei der Harzpunkt (68) und der Grund (40) der Aussparung (32) um einen Winkel (β) zueinander versetzt sind, der vorzugsweise dem Winkelsegment eines Polfingers (58, 62) entspricht.

8. Elektrische Maschine nach Anspruch 1, dadurch gekennzeichnet, daß die Einklemmstrecke (42) unterhalb eines Polfingers (58, 62) verläuft.

## Claims

1. Electric machine, in particular generator for vehicles, having a rotor, in particular claw-pole rotor (48) which is rotatably mounted in a stator housing and which has an exciter winding (24) which is arranged fixed in terms of rotation and coaxially with respect to a rotor shaft (50) and the start (26) and end (28) of whose winding are led to slip rings (64, 66) arranged on the rotor shaft, the exciter winding (24) being arranged on a winding carrier (11) which is formed by an insulating element which engages in a U shape around the exciter winding (24) and whose flange (24) which faces the slip rings (64, 66) has cut-outs (30, 32), which are open at the edges and are preferably located one opposite the other, in order to receive the start (26) and the end (28) of the winding, characterized in that the winding end (28), lying at the top, of the exciter winding (24) is clamped in tangentially in front of the cut-out (32) over a clamping-in section (42) between the exciter winding (24) and the flange (16) of the winding carrier (11).

2. Electric machine according to Claim 1, characterized in that the cut-out (32) for the end (28) of the winding extends radially as far as approximately an outer surface (34) of the exciter winding (24).

3. Electric machine according to one of the preceding claims, characterized in that the width of the cut-out (32) at its base (40) corresponds to the diameter of the winding wire.

4. Electric machine according to Claim 3, characterized in that the cut-out (32) for the end (28) of the winding above the base (40) is formed as an indent whose walls (33) adjoin one another.

5. Electric machine according to one of Claims 1 to 4, characterized in that the cut-out (32) for the end (28) of the winding extends as far as the imaginary circular line, in particular as far as the sleeve section (14), at which line the cut-out (30) for the start (26) of the winding ends (Figure 6).

6. Electric machine according to Claim 5, characterized in that the cut-out (32) for the end (28) of the winding runs at an angle (α) with respect to a radial line (70) of the winding carrier (11), which angle is preferably 25° to 30°.

7. Electric machine according to one of the preceding claims, characterized in that the end (28) of the winding is secured by means of an adhesive, in particular a resin point (68), on the exciter winding (24) and is led along the clamping-in section (42) to the base (40) of the cut-out (32), the resin point (68) and the base (40) of the recess (32) being offset with respect to one another by an angle (β) which preferably corresponds to the angular segment of a pole finger (58, 62).

8. Electric machine according to Claim 1, characterized in that the clamping-in section (42) runs underneath a pole finger (58, 62).

## Revendications

1. Machine électrique, en particulier générateur pour véhicule, comprenant un rotor monté rotatif sur un boîtier de stator ; en particulier rotor à pôle à griffes (38) présentant un bobinage d'excitation (24) disposé solidaire en rotation coaxialement à l'axe du rotor (50), dont le début (26) et l'extrémité (28) du bobinage sont reliés à des bagues collectrices (64, 66) disposées sur l'axe de rotor, le bobinage d'excitation (24) étant disposé sur un support de bobinage (11) constitué d'un matériau isolant entourant en forme de U le bobinage d'excitation (24) dont la bride (16) tournée vers les bagues collectrices (64, 66) présente des évidements (30, 32) ouverts vers le bord, de préférence opposés pour recevoir le début (26) et l'extrémité (28) du bobinage,
machine caractérisée en ce que
l'extrémité (28) du bobinage d'excitation (24) se trouvant au-dessus est serrée par un chemin de coinçage (42) tangentiellement entre le bobinage d'excitation (24) et la bride (16) du support de bobinage (11) avant l'évidement (32).

2. Machine électrique selon la revendication 1,
caractérisée en ce que
l'évidement (32) pour l'extrémité (28) du bobinage s'étend radialement jusqu'à environ une surface d'enveloppe (34) du bobinage d'excitation (24).

3. Machine électrique selon la revendication précédente,
caractérisée en ce que
la largeur du fond (40) de l'évidement (32) correspond au diamètre du fil de bobinage.

4. Machine électrique selon la revendication 3,
caractérisée en ce que
l'évidement (32) pour l'extrémité (28) du bobinage est réalisé au-dessus de sa base sous la forme d'une encoche dont les bords (33) se rejoignent.

5. Machine électrique selon l'une des revendications 1 à 4,
caractérisée en ce que
l'évidement (32) pour l'extrémité (28) du bobinage arrive jusqu'au cercle géométrique, en particulier jusqu'au segment de douille (14), au niveau duquel s'arrête l'évidement (30) pour le début (26) du bobinage (fig. 6).

6. Machine électrique selon la revendication 5,
caractérisée en ce que
l'évidement (32) pour l'extrémité (28) du bobinage fait un angle (α) par rapport à un rayon (70) du support de bobinage (11), cet angle (α) étant de préférence de 25 à 30°.

7. Machine électrique selon l'une des revendications précédentes,
caractérisée en ce que
l'extrémité (28) du bobinage est fixée sur le bobinage d'excitation (24) par un moyen de collage, en particulier un point de résine (68), il est guidé le long d'un chemin de coinçage (42) vers le fond (40) de l'évidement (32), le point de résine (68) et le fond (40) de l'évidement (32) étant décalés d'un angle (β) qui correspond de préférence au segment angulaire d'un doigt polaire (58, 62).

8. Machine électrique selon la revendication 1,
caractérisée en ce que
le chemin de coinçage (42) passe sous un doigt polaire (58, 62).
